# EUROPEAN PATENT APPLICATION

(11) **EP 3 754 215 A1**
(43) Date of publication of application: **23.12.2020**
(21) Application number: 19755183.1
(22) Date of filing: 14.02.2019
(51) Int. Cl.: F16C 32/06, B05B 5/16, F01D 25/16, F16C 27/06, F16F 15/04, F01D 15/06, F16C 33/72

(54) **SPINDLE DEVICE**

(30) Priority: 15.02.2018 JP 2018024670
(71) Applicant: NSK LTD., Shinagawa-Ku Tokyo 141-8560 (JP)
(72) Inventor: KOBAYASHI Naoya, Fujisawa-shi, Kanagawa 251-8501 (JP); TAKAHASHI Atsushi, Fujisawa-shi, Kanagawa 251-8501 (JP); KATSUNO Yoshiaki, Fujisawa-shi, Kanagawa 251-8501 (JP)
(74) Representative: Grünecker Patent- und Rechtsanwälte PartG mbB
(86) International application number: PCT/JP2019/005393
(87) International publication number: WO 2019/160049

(57) **Abstract**

Provided is a spindle device capable of stably rotating a rotation shaft thereof through enhancement of a vibration-attenuating effect. In the spindle device, an O-shaped ring disposed closest to the leading end in the axial direction of the rotation shaft, is located closer to the leading end than is the leading end surface of a radial bearing.

## Description

### Technical Field

The present invention relates to a spindle device using an air turbine drive system.

### Background Art

Spindle devices used in electrostatic coating machines are known. For example, Patent Document 1 discloses a spindle device which includes a journal bearing which supports a rotating shaft in a radial direction, a thrust bearing which supports the rotating shaft in a thrust direction, a housing which supports the rotating shaft via the journal bearing and the thrust bearing, and a cover located on an outer peripheral side of the housing. In the above spindle device, an O-ring is arranged between the housing and the cover to absorb the vibration caused by the high speed rotation and stabilize the operation of the spindle.

In particular, in Patent Document 1, it is described that a position of the O-ring is defined with an axial center of the housing as a starting point so that a front side of the rotating shaft swings greatly, and even when a high-strength material is used for the O-ring, the amount of deformation is increased to sufficiently increase the vibration damping effect.

### Prior Art Document

### Patent Document

Patent Document 1: JP-A2016-223553

### Summary of Invention

### Technical Problem

The spindle device described in Patent Document 1 aims at a vibration damping effect when a high-strength material is used for the O-ring. Generally, when the whirling of the rotating shaft becomes large due to the vibration, the journal bearing (radial bearing) or the thrust bearing contacts the rotating shaft, resulting in a decrease in the rotating speed.

Since the arrangement of the O-ring with respect to a position of the radial bearing is important for actual vibration damping, not the center of the housing, further improvement is required.

An object of the invention is to provide a spindle device capable of enhancing a vibration damping effect and stably rotating a rotating shaft.

### Solution to Problem

The above object of the invention is achieved by the following configurations.
(1) A spindle device including:
   a rotating shaft which includes a plurality of turbine blades installed in a circumferential direction and is configured to mount a mounting object on a tip;
   a housing which accommodates the rotating shaft;
   a radial bearing which is attached to the housing and floatingly supports the rotating shaft in a non-contact manner with respect to the housing by supplying gas;
   a case which is arranged to surround an outer peripheral surface of the housing; and
   a plurality of O-rings which are arranged between the housing and the case and supports the housing with respect to the case, where:
      the spindle device rotationally drives the rotating shaft by ejecting gas to the plurality of turbine blades; and
      the O-ring arranged closest to the tip is arranged closer to the tip side than a tip surface of the radial bearing in an axial direction of the rotating shaft.
(2) The spindle device according to (1), where:
   a center of gravity of the rotating shaft is located closer to the tip side than the tip surface of the radial bearing; and
   the O-ring arranged closest to the tip is arranged closer to the center of gravity of the rotating shaft than the tip surface of the radial bearing in the axial direction of the rotating shaft.
(3) The spindle device according to (2), where
   the O-ring arranged on the most tip side is arranged between the tip surface of the radial bearing and the center of gravity of the rotating shaft in the axial direction of the rotating shaft.
(4) The spindle device according to any one of (1) to (3), where
   the radial bearing is a cylindrical porous member.

### Advantageous Effects of Invention

According to the spindle device of the invention, the allowable momentum of the O-ring is increased and the vibration damping effect is enhanced, and thus the rotating shaft can be stably rotated.

### Brief Description of Drawings

Fig. 1 is a cross-sectional view of a spindle device according to an embodiment of the invention.
Fig. 2 is a half cross-sectional view of the spindle device illustrated in Fig. 1.

### Description of Embodiment

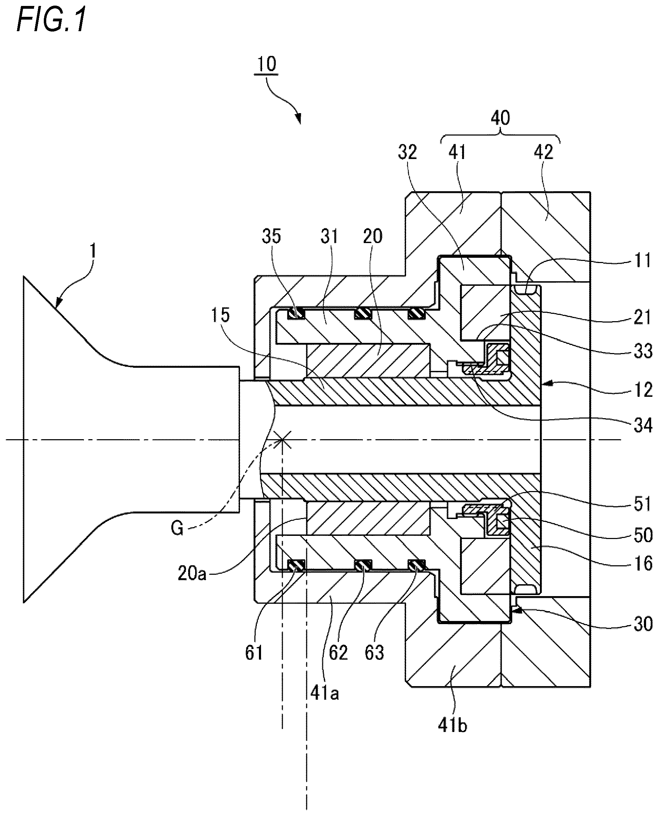

Hereinafter, a spindle device according to an embodiment of the invention will be described in detail with reference to the drawings. In the following description, a left side illustrated in Fig. 1 is called a front side and a right side is called a rear side.

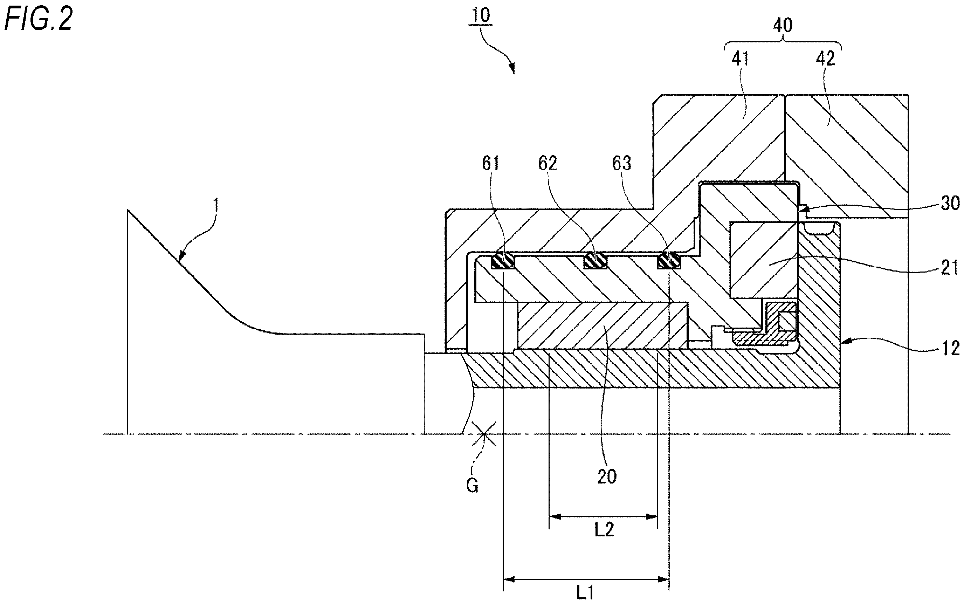

As illustrated in Figs. 1 and 2, a spindle device 10 of the embodiment is an air turbine drive type spindle device used for an electrostatic coating machine. The spindle device 10 mainly includes a rotating shaft 12 provided with a plurality of turbine blades 11 in a circumferential direction, a radial bearing 20, which is a static pressure gas bearing that supports the rotating shaft 12 in the radial direction, a thrust bearing 21 which is a static pressure gas bearing that supports the rotating shaft 12 in a thrust direction, a magnet 50 which attracts the rotating shaft 12 in the thrust direction, a housing 30 which accommodates the rotating shaft 12, and a case 40 arranged to surround an outer peripheral surface of the housing 30.

The rotary shaft 12 includes a cylindrical portion 15 with a bell cup (mounting object) 1, which is used for atomizing and spraying paint, attached to a tip side and a disk portion 16 extending radially outward from a rear end of the cylindrical portion 15.

The plurality of turbine blades 11 are formed by processing an outer peripheral surface of the disk portion 16.

The housing 30 includes a cylindrical part 31 provided around the cylindrical portion 15 of the rotating shaft 12 and having the radial bearing 20 attached to an inner peripheral surface thereof and a disk part 32 provided in front of the disk portion 16 of the rotating shaft 12 and extending radially outward from a rear end of the cylindrical part 31. In the disk part 32, an annular groove 33 having a U-shaped cross section (rectangular cross section) is formed to open rearward to accommodate the thrust bearing 21.

The case 40 includes a front case 41 and a rear case 42. The front case 41 includes a small diameter portion 41a provided around the cylindrical part 31 of the housing 30 and a large diameter portion 41b provided around the disk part 32 of the housing 30 and is formed in a hollow and stepped shape. The rear case 42 is also formed in a hollow shape and is fastened and fixed to the rear end surface of the front case 41 by a bolt (not illustrated).

The radial bearing 20 is a cylindrical porous member and faces an outer peripheral surface of the cylindrical portion 15 of the rotating shaft 12. In the bearing 20, the compressed air is blown toward the outer peripheral surface of the cylindrical portion 15 of the rotating shaft 12 by the gas supplied from a rear end surface of the rear case 42 and passing through a bearing air supply path (not illustrated) formed in the case 40 and the housing 30, in such a manner that the rotating shaft 12 is floatingly supported in a non-contact manner with respect to the housing 30. As a result, the rotating shaft 12 is supported by the radial bearing 20 in the radial direction with respect to the housing 30.

The thrust bearing 21 is a cylindrical porous member and an axial rear end surface of the thrust bearing 21 faces a front surface of the disk portion 16 of the rotating shaft 12. The thrust bearing 21 blows compressed air toward the front surface of the disk portion 16 of the rotating shaft 12 by supplying gas from a path branched from the bearing air supply path.

The magnet 50 is held by a magnet yoke 51 and the magnet yoke 51 is screwed and attached to a magnet attaching portion 34 formed inside the disk part 32 of the housing 30. Here, the magnet 50 closely faces the front side surface of the disk portion 16.

Therefore, the magnetic force of the magnet 50 pulls the disk portion 16 forward. The thrust bearing 21 generates reaction force by blowing compressed air toward the front side surface of disk portion 16 and the rotating shaft 12 is supported in the thrust direction with respect to the housing 30 by the attractive force of the magnet 50 and the reaction force of the thrust bearing 21.

In the rear case 42, a turbine air supply path for supplying compressed air for operation to the turbine blade 11 is formed in a phase different from that of the bearing air supply path. In the rear case 42, a plurality of nozzles communicating with the turbine air supply path are formed with openings on an inner peripheral surface. Therefore, the rotating shaft 12 can obtain a predetermined rotation speed by controlling the flow rate of the air supplied to the turbine air supply path.

In the spindle device 10 configured as such, by supplying gas to the radial bearing 20 and the thrust bearing 21, the rotating shaft 12 is rotatably supported by the housing 30. By ejecting gas from the plurality of nozzles toward the plurality of turbine blades 11, the kinetic energy of the jet flow is converted into a rotational driving force of the rotating shaft 12 and the rotating shaft 12 is rotationally driven.

At least three (three in the present embodiment) ring grooves 35 are provided on an outer peripheral surface of the cylindrical part 31 of the housing 30 and at least three (three in the present embodiment) O-rings 61, 62, and 63 are respectively arranged in those ring grooves 35. The three O-rings 61, 62, and 63 are elastically deformed and some of them are in contact with the inner peripheral surface of the case 40. The housing 30 and the case 40 are arranged with a gap therebetween in the radial direction.

Due to the shape of the rotating shaft, the three O-rings 61, 62, and 63 dampen those loads and vibrations so that a vibrational force due to unbalanced load or resonance is not directly transmitted to the radial bearing 20 and thrust bearing 21.

Particularly, in the axial direction of the rotating shaft 12, the O-ring 61 arranged closest to the tip side is arranged closer to the tip side of the rotating shaft 12 than a tip surface 20a of the radial bearing 20. That is, the O-ring 61 does not overlap with the radial bearing 20 in the axial direction of the rotating shaft 12. As a result, it becomes possible to receive a larger momentum and the vibration damping effect also becomes greater. The amplitude of the rotating shaft 12 during vibration can be effectively reduced by the arrangement of the O-ring 61. Therefore, the rotating shaft 12 can be stably rotated even when it receives a large vibration.

Therefore, the housing 30 where the O-ring is arranged is formed longer than the tip surface 20a of the radial bearing 20 on the tip side of the rotating shaft 12 so that the O-ring 61 does not overlap with the radial bearing 20.

When a center of gravity G of the rotating shaft 12 is located closer to the tip side than the tip surface 20a of the radial bearing 20, in the axial direction of the rotating shaft 12, the O-ring 61 arranged closest to the tip side is arranged closer to the center of gravity of the rotating shaft 12 than the tip surface 20a of the radial bearing 20.

The O-ring 61 is preferably arranged between the tip surface 20a of the radial bearing 20 and the center of gravity G of the rotating shaft 12 in the axial direction of the rotating shaft. Since the unbalance generally occurs in the bell cup 1 on the tip side of the rotating shaft 12, by arranging the O-ring 61 on the output side, it is possible to damp the vibration at a place near the unbalanced position where the vibration is reduced.

As illustrated in Fig. 2, a fulcrum distance L1 of the two O-rings 61 and 63 located at both ends in the axial direction is designed to be larger than a fulcrum distance L2 of the radial bearing 20. That is, since the spans of the O-rings 61, 62, and 63 having a large vibration damping action are formed widely, the effect of further damping the vibration can be obtained.

The fulcrum of the radial bearing 20 may indicate both ends of the radial bearing or a fulcrum that actually functions as a spring element on the rigid support at the axial center of the radial bearing.

In the embodiment, when the center of gravity G of the rotating shaft 12 is located closer to the tip side than the tip surface 20a of the radial bearing 20 with the bell cup 1 attached, the vibration damping effect of the O-ring 61 is obtained. On the other hand, in a state where the bell cup 1 is not attached, when the center of gravity G of the rotating shaft 12 is located closer to the tip side than the tip surface 20a of the radial bearing 20, even when the bell cup 1 is attached, since it is located closer to the tip side than the tip surface 20a of the radial bearing 20, the vibration damping effect of the O-ring 61 can be obtained.

The two O-rings 62 and 63 may be arranged at arbitrary positions in the axial direction of the rotating shaft 12. When the bearing air supply path passes from the inner peripheral surface of the case 40 to the outer peripheral surface of the housing 30 between the two O-rings 61 and 62 or between the two O-rings 62 and 63, the two O-rings 61 and 62 or the two O-rings 62 and 63 can also serve as a seal for the bearing air supply.

The invention is not limited to the embodiment described above and can be modified, improved, and the like as appropriate.

For example, in the embodiment, the spindle device of the invention is described as being used in an electrostatic coating machine. However, the invention is not limited thereto and can be applied to a semiconductor manufacturing apparatus (wafer outer peripheral chamfering machine) and an edge deburring machine for machined products.

In the embodiment, although the thrust bearing 21 and the magnet 50 are used to support the rotating shaft 12 in the thrust direction, a plurality of gas bearings may be used to support the rotating shaft 12 in the thrust direction.

The gas bearing of the invention is not limited to the one formed of a porous member and may be another static pressure type one such as a self-made throttle. However, the gas bearing using the porous member can easily ensure the rigidity, and therefore, sufficient rigidity can be ensured even when the flow rate of the gas is low.

The present application is based on a Japanese patent application filed on February 15, 2018 (Japanese Patent Application No. 2018-24670), the contents of which are incorporated by reference into the present application.

### Reference Signs List

10: spindle device
11: turbine blade
12: rotating shaft
20: radial bearing
21: thrust bearing
30: housing
40: case
50: magnet
61, 62, 63: O-ring

## Claims

1. A spindle device comprising:
a rotating shaft which includes a plurality of turbine blades installed in a circumferential direction and is configured to mount a mounting object on a tip;
a housing which accommodates the rotating shaft;
a radial bearing which is attached to the housing and floatingly supports the rotating shaft in a non-contact manner with respect to the housing by supplying gas;
a case which is arranged to surround an outer peripheral surface of the housing; and
a plurality of O-rings which are arranged between the housing and the case and supports the housing with respect to the case, wherein:
the spindle device rotationally drives the rotating shaft by ejecting gas to the plurality of turbine blades; and
the O-ring arranged closest to the tip is arranged closer to the tip side than a tip surface of the radial bearing in an axial direction of the rotating shaft.

2. The spindle device according to claim 1, wherein:
a center of gravity of the rotating shaft is located closer to the tip side than the tip surface of the radial bearing; and
the O-ring arranged closest to the tip is arranged closer to the center of gravity of the rotating shaft than the tip surface of the radial bearing in the axial direction of the rotating shaft.

3. The spindle device according to claim 2, wherein
the O-ring arranged on the most tip side is arranged between the tip surface of the radial bearing and the center of gravity of the rotating shaft in the axial direction of the rotating shaft.

4. The spindle device according to any one of claims 1 to 3, wherein
the radial bearing is a cylindrical porous member.
